(19) Europäisches Patentamt
European Patent Office
Office européen des brevets

(11) **EP 3 486 136 A1**

(12) **EUROPEAN PATENT APPLICATION**
published in accordance with Art. 153(4) EPC

(43) Date of publication:
**22.05.2019 Bulletin 2019/21**

(51) Int Cl.:
**B61K 9/08** (2006.01)    **E01B 35/04** (2006.01)
**G01B 21/00** (2006.01)

(21) Application number: **16908798.8**

(22) Date of filing: **12.07.2016**

(86) International application number:
**PCT/JP2016/070573**

(87) International publication number:
**WO 2018/011894 (18.01.2018 Gazette 2018/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Central Japan Railway Company
Nagoya-shi, Aichi 450-6101 (JP)**

(72) Inventors:
• **NAGANUMA, Yasukuni
  Nagoya-shi, Aichi 450-6101 (JP)**
• **YADA, Taro
  Nagoya-shi, Aichi 450-6101 (JP)**

(74) Representative: **Barker Brettell LLP
100 Hagley Road
Edgbaston
Birmingham B16 8QQ (GB)**

(54) **MEASURING DEVICE AND MEASURING METHOD**

(57)    In a measuring device, when beam members having specified lengths are moved over rails while one of the beam members being in contact with one of the rails at two rollers spaced apart from each other by a preset distance, an angular velocity acting on the one of the beam members is detected, and a product of the angular velocity detected and a distance between two points that is a distance between the contact points respectively contacting the two rollers is calculated as an amount of a track geometry at a midpoint of the two contact points.

FIG. 1

**Description**

TECHNICAL FIELD

The present disclosure relates to a technique for measuring a track geometry.

BACKGROUND ART

For a safe and comfortable traveling of a railway vehicle, it is necessary to maintain and manage railway tracks to be always in good condition. For this purpose, measuring a track geometry, which is an amount of an irregularity in a rail, is indispensable.

As a measuring method for a track geometry, the difference method and the inertial measurement method are known. In a measuring device in which the difference method is adopted, reference beams of 1 to 3 m, for example, are pressed against rails, and a relative displacement between the central point of the beams and the rails are measured by a displacement gauge in order to measure an irregularity in longitudinal level and an irregularity in alignment. On the other hand, in a measuring device in which the inertial measurement method is adopted, the irregularity in longitudinal level and the irregularity in alignment are calculated, for example, as described in Patent Document 1, by calculating acceleration detected by an accelerometer, which is attached to an axle box or a vehicle body, using a second-order integral in order to measure the track geometry.

PRIOR ART DOCUMENTS

PATENT DOCUMENTS

Patent Document 1: Japanese Unexamined Patent Application Publication No. 2009-300398

SUMMARY OF THE INVENTION

PROBLEMS TO BE SOLVED BY THE INVENTION

In order to maintain the good track condition, it is necessary to know the state of the track in the widest possible wavelength range, and it is desirable that the measurement gains in the measured wavelength range are large in both the short-wavelength component and the long-wavelength component. The short-wavelength component mentioned herein is, in the case of the versine method, a component of a wavelength shorter than 1/2 of the chord length. The long-wavelength component is a component of a wavelength longer than 1/2 of the chord length.

However, in the above-described conventional measuring method, there has been a problem to be described below.

In the difference method, when the measurement gains are compared in the short-wavelength component and in the long-wavelength component of the measured wavelength range, the maximum value of the measurement magnification in the short-wavelength component becomes a constant value. For example, this magnification in the first order difference method and in the second order difference method is 2.0. On this account, to measure the track geometry and to also know the state of the fluctuation in the short wavelength, processing by a filter is required to amplify the measurement gain in the short wavelength to a necessary level. Accordingly, the processing load on the device increases.

In the inertial measurement method, since the waveform is obtained by the second-order integral of the acceleration as described above, the measurement gains in the measured wavelength range are all 1.0. On this account, to measure the track geometry and to also know the state of the fluctuation in the short wavelength, processing by a high-pass filter is required to amplify the measurement gain in the short wavelength to a necessary level. Accordingly, the processing load on the device increases.

In one aspect of the present disclosure, it is desirable to provide a technique by which a track geometry can be measured while a processing load is suppressed, and the state of fluctuation in a short wavelength can be also known.

MEANS FOR SOLVING THE PROBLEMS

A measuring device according to one aspect of the present disclosure is a measuring device that measures a track geometry of a track on which a vehicle travels.

The measuring device comprises beam members, a detector, and a calculator.

The beam members have specified lengths.

The detector detects an angular velocity acting on one of the beam members, when the beam members are moved over the track while the one of the beam members is in contact with the track at two contact points spaced apart from each other by a preset distance.

The calculator calculates a product of the angular velocity detected by the detector and a distance between two points that is a distance between the two contact points as an amount of the track geometry at a midpoint of the two contact points.

According to the present disclosure, out of the measurement gains in a measured wavelength band, the short-wavelength component, which is a component of a wavelength shorter than the length of the one of the beam members, does not become as small as a short-wavelength component in the difference method. Thus, there is no need to perform processing by a high-pass filter so as to amplify the measurement gain in the short wavelength, which inhibits the processing load on the device from becoming high. To emphasize the long-wavelength component, processing by a low-pass filter may be performed, in which the processing load on the device is small. Therefore, the track geometry can be measured while the processing load is suppressed, and the state of the fluctuation in the short wavelength can be also known.

A measuring method according to the present disclosure is a measuring method for measuring a track geometry of a track on which a vehicle travels.

In the proposed measuring method, when beam members having specified lengths are moved over the track while one of the beam members is in contact with the track at two contact points spaced apart from each other by a preset distance, an angular velocity acting on the one of the beam members is detected. A product of the angular velocity detected and a distance between two points that is a distance between the two contact points is calculated as an amount of the track geometry at a midpoint of the two contact points.

According to the present disclosure, out of the measurement gains in the measured wavelength band, the short-wavelength component, which is the component of the wavelength shorter than the length of the one of the beam members, does not become as small as the short-wavelength component in the difference method. Thus, there is no need to perform processing by the high-pass filter so as to amplify the measurement gain in the short wavelength, which inhibits the processing load on the device from becoming large. To emphasize the long-wavelength component, processing by the low-pass filter may be performed, in which the processing load on the device is small. Therefore, the track geometry can be measured while suppressing the processing load, and the state of the fluctuation in the short wavelength can be also known.

BRIEF DESCRIPTION OF THE DRAWINGS

FIG. 1 is a schematic configuration diagram showing a structure of a measuring device;
FIG. 2 is a schematic configuration diagram showing the structure of the measuring device;
FIG. 3 is an explanatory diagram illustrating a measuring method for a track geometry by the measuring device; and
FIG. 4 is an explanatory diagram illustrating the measuring method for a track geometry by the measuring device.

EXPLANATION OF REFERENCE NUMERALS

1...measuring device, 11, 12...beam member, 13...joint, 14, 15, 16...roller, 17...grip portion, 18...gas damper, 19A...potentiometer, 19B...inclinometer, 20...rotary encoder, 21, 22...gyro sensor, 23...processor, 23A...electric wire

MODE FOR CARRYING OUT THE INVENTION

With reference to the drawings, the following describes an embodiment to carry out the present disclosure.

[1. Structure]

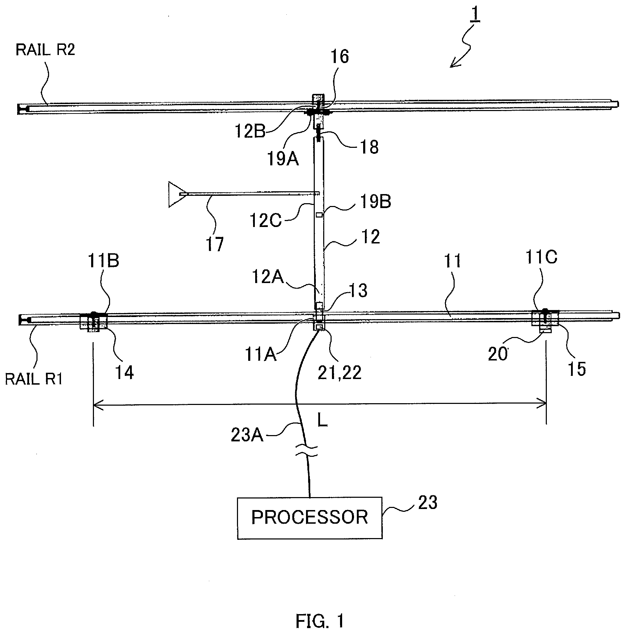

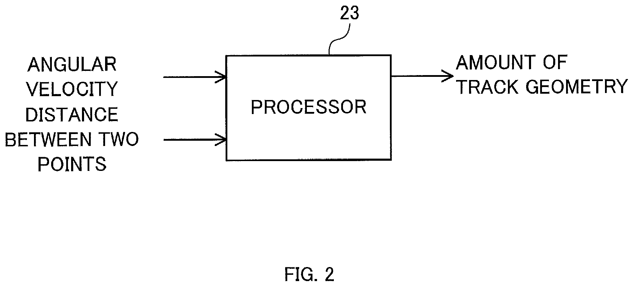

A measuring device 1 is a device that measures a track geometry of a track over which a vehicle travels. As shown in FIGS. 1 and 2, the measuring device 1 comprises two beam members 11, 12, a joint 13 connecting the two beam members 11, 12, three rollers 14, 15, 16, a grip portion 17, a gas damper 18, a potentiometer 19A, an inclinometer 19B, a rotary encoder 20, gyro sensors 21, 22, and a processor 23.

The beam members 11, 12 are rod-like members having specified lengths. The beam member 11 is arranged along the longitudinal direction of rails R1, R2. The beam member 12 is arranged along a direction orthogonal to the longitudinal direction of the rails R1, R2 on a horizontal plane.

The joint 13 connects a central portion 11A of the beam member 11 and an end portion 12A of the beam member 12.

The roller 14 is attached to an end portion 11B of the beam member 11. The roller 14 is configured to be able to run while abutting a tread of the rail R1. The roller 15 is attached to an end portion 11C of the beam member 11. The roller 15 is configured to be able to run while abutting the tread of the rail R1. The roller 16 is attached to an end portion 12B of the beam member 12. The roller 16 is configured to be able to run while abutting a tread of the rail R2. When a track geometry of the rail R1 is measured with the measuring device 1, the rollers 14, 15 are brought into contact with the rail R1, and the roller 16 is brought into contact with the rail R2.

The grip portion 17 is attached to the beam member 12. The grip portion 17 is formed in a rod-like shape to allow easy gripping for an operator.

The gas damper 18 is attached to the end portion 12B. The gas damper 18 absorbs an impact generated when the distance between the central portion 11A and the end portion 12B changes.

The potentiometer 19A is attached to the end portion 12B. The potentiometer 19A detects the distance between the central portion 11A and the end portion 12B.

The inclinometer 19B is attached a central portion 12C of the beam member 12. However, the installation position does not have to be in the central portion 12C. The inclinometer 19B detects an inclination angle of the beam member 12 from a horizontal plane so as to measure a height difference between the left rail and the right rail.

The rotary encoder 20 is attached to the roller 15. The rotary encoder 20 detects the rotational angle of the roller 15.

The gyro sensors 21, 22 are provided in the central portion 11A. However, the installation position does not have to be in the central portion 11A. The gyro sensor 21 is a single-axis gyro, and the amount of variation in the pitch angle of the beam member 11 is detected by the gyro sensor 21. Accordingly, the gyro sensor 21 detects a pitch angular velocity, which is the angular velocity around the pitch axis of the beam member 11, when the beam member 11 is moved on the rail R1 while the rollers 14, 15 are in contact with the rail R1. The gyro sensor 22 is a single-axis gyro, and the amount of variation in the yaw angle of the beam member 11 is detected by the gyro sensor 22. Accordingly, the gyro sensor 22 detects a yaw angular velocity, which is the angular velocity around the yaw axis of the beam member 11, when the beam member 11 is moved on the rail R1 while the rollers 14, 15 are in contact with the rail R1. The gyro sensors 21, 22 corresponds to one example of the detector.

The processor 23 is composed mainly of a known microcomputer having a CPU and a memory. The memory is a semiconductor memory, such as a RAM, a ROM, and a flash memory. Various functions of the processor 23 is achieved by the CPU executing programs stored in a non-transitory tangible storage medium. In this embodiment, the memory corresponds to the non-transitory tangible storage medium storing the programs. Execution of the programs enables execution of methods corresponding to the programs. The number of the microcomputer(s) configuring the processor 23 may be one or more. A part of or the entire of the functions executed by the processor 23 may be configured as hardware, such as one or more IC(s). The processor 23 corresponds to one example of the calculator.

The processor 23 is formed in a portable shape. The processor 23 is connected to the potentiometer 19A, the inclinometer 19B, the rotary encoder 20, and the gyro sensors 21, 22 by an electric wire 23A. The processor 23 can obtain signals outputted by the potentiometer 19A, the inclinometer 19B, the rotary encoder 20, and the gyro sensors 21, 22 via the electric wire 23A. The processor 23 may be configured to wirelessly obtain the signals from the potentiometer 19A, the inclinometer 19B, the rotary encoder 20, and the gyro sensors 21, 22. The processor 23 may also be arranged on the beam member 12.

The processor 23 uses the rotation angle of the roller 15 outputted from the rotary encoder 20 to calculate the distance that the measuring device 1 has traveled on the rails R1, R2 and the current position of the measuring device 1.

The processor 23 calculates the amount G1 of an irregularity in longitudinal level of the rail R1. In other words, the processor 23 calculates the product of the pitch angular velocity $\omega 1$ around the pitch axis of the beam member 11 outputted from the gyro sensor 21 and the distance L of two points, which is the distance between the rollers 14, 15, as the amount G1 of the irregularity in longitudinal level at the midpoint of the rollers 14, 15. To calculate the amount G1 of the irregularity in longitudinal level of the rail R1, the following formula (1) is used. The processor 23 calculates the amount G2 of an irregularity in alignment of the rail R1. That is, the processor 23 calculates the product of the yaw angular velocity $\omega 2$ around the yaw axis of the beam member 11 outputted from the gyro sensor 22 and the distance L of two points, which is the distance between the rollers 14, 15, as the amount G2 of the irregularity in alignment at the midpoint of the rollers 14, 15. To calculate the amount G2 of the irregularity in alignment of the rail R1, the following formula (2) is used.

[Mathematical Formula 1]

$$G_1 = L\omega_1$$

$$(1)$$

$$G_2 = L\omega_2$$

$$(2)$$

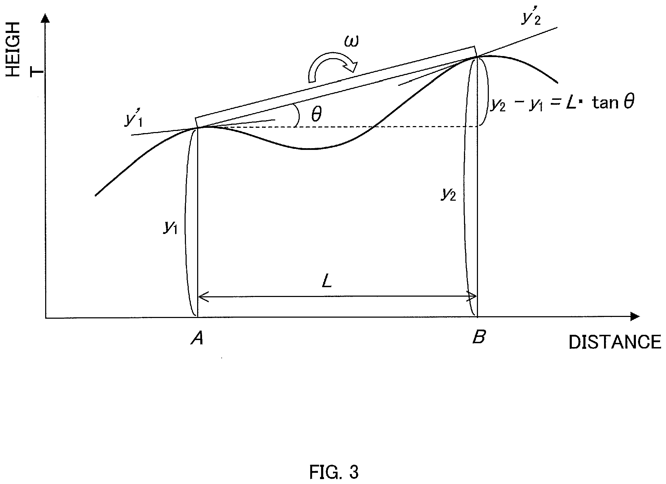

The above-described formula (1) and formula (2) are derived from using the following formula (3), which will be explained below with reference to FIG. 3. FIG. 3 is a graph in which the horizontal axis shows the distance from the starting point of measurement, and the vertical axis shows the height dimension from the reference surface to the top surface of the rail. The difference G in inclination at two measuring points is expressed by the following formula (3).
[Mathematical Formula 2]

$$G = y_2' - y_1' = (L \cdot \tan\theta)' = L\frac{1}{\cos^2\theta} \cdot \frac{d\theta}{dt} = L\omega$$

$$(3)$$

y1 represents the height dimension from the installation surface of the rail at a measurement point A to the top surface of the rail.
y2 represents the height dimension from the installation surface of the rail at a measurement point B to the top surface of the rail.
y1' represents the inclination of the beam member at the measurement point A.
y2' represents the inclination of the beam member at the measurement point B.
L represents the distance dimension between the two measurement points.
θ represents the angle between the horizontal line and the beam member.
ω represents the angular velocity generated in the beam member.

The difference G in inclination at the two measurement points corresponds to the amount of the track geometry at the midpoint of the two measurement points. Accordingly, when the gyro sensor is arranged on the beam member, which becomes a measurement reference, and the beam member is moved on the rail, the amount of the irregularity in longitudinal level or the amount of the irregularity in alignment at the midpoint of the two measurement points is obtained by multiplying the pitch angular velocity or the yaw angular velocity outputted from the gyro sensor by the distance dimension L between the two measurement points.

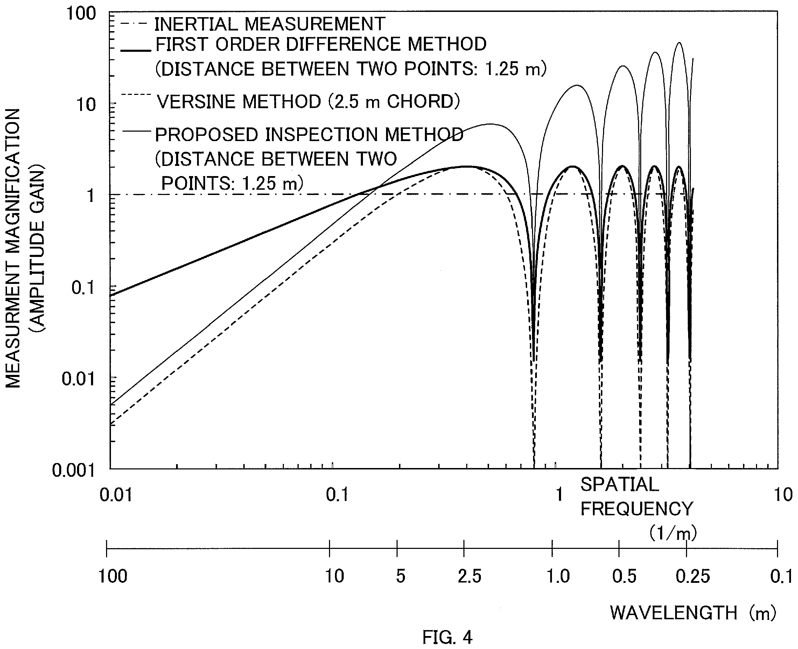

FIG. 4 is a graph showing the characteristics of the measurement gain in each measuring method. In this graph, the horizontal axis shows the spatial frequency, while the vertical axis shows the measurement magnification. According to the proposed measuring method, there is a characteristic in which the measurement gain in the short wavelength is higher as compared to the conventional measuring methods, and the state of the fluctuation in the short wavelength can be known from the outputted waveform.

When the track geometry of the rail R2 is measured with the measuring device 1, the rollers 14, 15 are brought into contact with the rail R2, and the roller 16 is brought into contact with the rail R1. The processor 23 uses the angular velocity ω1 of the beam member 11 outputted from the gyro sensor 21, and calculates the amount G1 of the irregularity in longitudinal level of the rail R2. To calculate the amount G1 of the irregularity in longitudinal level of the rail R2, the above-described formula (1) is used. The processor 23 uses the angular velocity ω2 of the beam member 11 outputted from the gyro sensor 22 and calculates the amount G2 of the irregularity in alignment of the rail R2. To calculate the amount G2 of the irregularity in alignment of the rail R2, the above-described formula (2) is used.

The aforementioned formula (1) and formula (2) are used in a case where the measuring velocity v that is the velocity at which the measuring device 1 is moved to measure the track geometry in alignment is constant. In a case where the measuring velocity v is variable, the following formula (4) and formula (5) are used.
[Mathematical Formula 3]

$$G_1 = L\omega_1/v$$

$$(4)$$

$$G_2 = L\omega_2/v$$

$$(5)$$

[2. Effect]

According to the embodiment described above in detail, in a case where the beam member 11 is moved on the rail R1 while the beam member 11 having a specified length is in contact with the rail R1 at the two rollers 14, 15 spaced apart from each other by a preset distance, the angular velocity acting on the beam member 11 is detected. Moreover, the product of the detected angular velocity and the distance between two points, that is, the distance between the contact points respectively contacting with the two rollers 14, 15 is calculated as the amount of the track geometry at the midpoint of the two contact points. Thus, out of the measurement gains in the measured wavelength band, the short-wavelength component, which is a component of a wavelength shorter than the length of the beam member 11, does not become as small as the short-wavelength component in the difference method. Thus, there is no need to perform processing by a high-pass filter so as to amplify the measurement gain in the short wavelength. This inhibits the processing load on the device from becoming large. To emphasize the long-wavelength component, processing by a low-pass filter may be performed, in which the processing load on the device is small. Therefore, while suppressing the processing load, the track geometry can be measured and the state of the fluctuation in the short wavelength can be also known.

[3. Other Embodiment]

The embodiments to carry out the present disclosure has been described above. However, the present disclosure is not limited to the above-described embodiment and can be carried out in variously modified manners.

(1) Several functions possessed by a single component in the above-described embodiment may be achieved by several components; a single function possessed by a single component may be achieved by several components. Several functions possessed by several components may be achieved by a single component; a single function achieved by several components may be achieved by a single component. Some parts of the configuration of the above-described embodiment may be omitted. At least one part of the component(s) of the above-described embodiment may be added to or altered with the component(s) of another embodiment described above. All modes included in the technical idea identified only by the language described in the claims are embodiments of the present disclosure.
(2) In addition to the above-described measuring device 1, the present disclosure can be achieved in various forms including: a system comprising the measuring device 1 as its component; a program that makes a computer function as the processor 23 of the measuring device 1; a non-transitory tangible storage medium, such as a semiconductor memory, storing the program; and a measuring method.

**Claims**

1. A measuring device that measures a track geometry of a track on which a vehicle travels, the measuring device comprising:

   beam members having specified lengths;
   a detector that detects an angular velocity acting on one of the beam members, when the beam members are moved over the track while the one of the beam members being in contact with the track at two contact points spaced apart from each other by a preset distance; and

a calculator that calculates a product of the angular velocity detected by the detector and a distance between two points that is a distance between the two contact points as an amount of the track geometry at a midpoint of the two contact points.

2. The measuring device according to claim 1,
wherein the detector detects a pitch angular velocity that is an angular velocity around a pitch axis of the one of the beam members as the angular velocity, and
wherein the calculator calculates a product of the pitch angular velocity detected and the distance between the two points to obtain an amount of an irregularity in longitudinal level at the midpoint of the two contact points as the amount of the track geometry.

3. The measuring device according to claim 1,
wherein the detector detects a yaw angular velocity that is an angular velocity around a yaw axis of the one of the beam members as the angular velocity, and
wherein the calculator calculates a product of the yaw angular velocity detected and the distance between the two points to obtain an amount of an irregularity in alignment at the midpoint of the two contact points as the amount of the track geometry.

4. A measuring method for measuring a track geometry of a track on which a vehicle travels, the method comprising:

detecting, when beam members having specified lengths are moved over the track while one of the beam members being in contact with the track at two contact points spaced apart from each other by a preset distance, an angular velocity acting on the one of the beam members; and
calculating a product of the angular velocity detected and a distance between two points that is a distance between the two contact points as an amount of the track geometry at a midpoint of the two contact points.

5. The measuring method according to claim 4,
wherein a pitch angular velocity that is an angular velocity around a pitch axis of the one of the beam members is detected as the angular velocity, and
wherein a product of the pitch angular velocity detected and the distance between the two points is calculated to obtain an amount of an irregularity in longitudinal level at the midpoint of the two contact points as the amount of the track geometry.

6. The measuring method according to claim 4,
wherein a yaw angular velocity that is an angular velocity around a yaw axis of the one of the beam members is detected as the angular velocity, and
wherein a products of the yaw angular velocity detected and the distance between the two points is calculated to obtain an amount of an irregularity in alignment at the midpoint of the two contact points as the amount of the track geometry.

FIG. 1

FIG. 2

FIG. 3

FIG. 4

<div align="center">

**INTERNATIONAL SEARCH REPORT**

</div>

| | International application No. |
| --- | --- |
| | PCT/JP2016/070573 |

**A. CLASSIFICATION OF SUBJECT MATTER**
*B61K9/08*(2006.01)i, *E01B35/04*(2006.01)i, *G01B21/00*(2006.01)i

According to International Patent Classification (IPC) or to both national classification and IPC

**B. FIELDS SEARCHED**

Minimum documentation searched (classification system followed by classification symbols)
B61K9/08, E01B35/04, G01B21/00

Documentation searched other than minimum documentation to the extent that such documents are included in the fields searched
Jitsuyo Shinan Koho      1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-251840 A (Railway Technical Research Institute), 20 December 2012 (20.12.2012), (Family: none) | 1-6 |
| A | JP 2009-19919 A (East Japan Railway Co.), 29 January 2009 (29.01.2009), (Family: none) | 1-6 |
| A | JP 2004-251842 A (Central Japan Railway Co.), 09 September 2004 (09.09.2004), (Family: none) | 1-6 |
| A | JP 2001-63570 A (Railway Technical Research Institute), 13 March 2001 (13.03.2001), (Family: none) | 1-6 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 September 2016 (21.09.16) | 04 October 2016 (04.10.16) |

| Name and mailing address of the ISA/ Japan Patent Office 3-4-3,Kasumigaseki,Chiyoda-ku, Tokyo 100-8915,Japan | Authorized officer Telephone No. |
| --- | --- |

Form PCT/ISA/210 (second sheet) (January 2015)

**INTERNATIONAL SEARCH REPORT**

| International application No. |
| --- |
| PCT/JP2016/070573 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 5-196465 A  (Nippon Steel Corp.),<br>06 August 1993 (06.08.1993),<br>(Family: none) | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009300398 A